# EUROPEAN PATENT SPECIFICATION

(11) **EP 2 544 018 B1**
(45) Date of publication and mention of the grant of the patent: **03.04.2013**
(21) Application number: 11290288.7
(22) Date of filing: 27.06.2011
(51) Int. Cl.: G01S 1/68

(54) **Estimating a location of a mobile device**
Schätzung der Position einer mobilen Vorrichtung
Estimation de la localisation d'un dispositif mobile

(43) Date of publication of application: 09.01.2013
(73) Proprietor: Alcatel Lucent, 75007 Paris (FR)
(72) Inventor: Chen, Yejian, 70191 Stuttgart (DE); Halbauer, Hardy, 76275 Ettlingen (DE); Saur, Stephan, 70567 Stuttgart (DE)
(74) Representative: Wetzel, Emmanuelle

(56) References cited:
- WO-A1-2010/035025
- WO-A2-2007/099416
- FR-A1- 2 783 389
- KR-B1- 100 821 615
- US-A1- 2006 092 072

## Description

### Background and related art

The location of a mobile device is estimated in wireless telecommunication networks by measuring a beamforming angle and/or calculating a path loss value

WO 2010/035025 A1 describes a method of providing improvised location data for a mobile device which comprises determining that the mobile device is within range of a sensor device. The sensor device comprises one of a plurality of independent sensor devices having unique location identifiers. The mobile device receives from the sensor device the unique location identifier of that sensor device and then forwards the sensor device location identifier to a network of the mobile device. The network uses the sensor device location identifier to determine the location of the mobile device.

FR 2 783 389 A1 describes a system comprising mobile stations and a base station connected to the mobile stations via radio communication.The mobile stations are served by the same base station using the same frequency. Means for detecting if several mobile stations are near to each other is provided.

US 2006 0092072 A1 descibres a monitored area with multiple RFID tags placed at defined coordinates/locations throughout the extended area. These RFID tags respond to receipt of a RF signal by transmitting/broadcasting their unique identifier (ID) within the specific area in which the tag is located. A device, whose location within the monitored area is desired, is equipped with an RFID interrogating device, such as an RF transceiver, which periodically broadcasts RF interrogation signals The multiple RFID tags are positioned at specific areas within the environment to allow the RF interrogating device to receive the RFID signal and utilized the received data to independently determine the device's location.

### Summary

It is an object of the present invention to provide an improved method for estimating a location, an improved base station, and an improved computer program product.

The objects of the invention are achieved by the subject matter of the independent claims. Embodiments of the invention are given in the dependent claims.

The invention relates to a method for estimating a location of a mobile device in a digital cellular wireless communication network. A sensor ID is received at a base station from the mobile device. The sensor ID corresponds to a sensor and has been sent from the sensor to the mobile device via an air interface. The sensor may for example be a sensor used for sensing parameters of a production process or a sensor for sensing RFID tags of goods to be conveyed. The sensor could also be a sensor for sensing vital functions of a human being. In general the sensor is used for sensing measurement values. The kind of sensor can be chosen from a variety of sensors.

Location information for the sensor ID is retrieved from a storage by the base station. For example the location information is stored in a database stored in the storage. The storage may be comprised by the base station. Alternatively the storage could also be located in another network entity. In this case the base station has direct or indirect access to the storage.

The location of the mobile device is estimated by using the location information by the base station. In other words, the base station uses the retrieved location information for determining the location of the mobile device. It is to be noted that only the sensor ID is used for estimating the location. The measurement values sensed by the sensor are not used for estimating the location. The values sensed by the sensor can be used in many different ways such as conveying goods, checking vital functions or controlling an automation process.

In other words the sensor is used for estimating the location of the mobile device in addition to a sensing function of the sensor. The sensing function of the sensor is not used for estimating the location of the mobile device. The base station has access to location information. The location information may for example be a database defining for each sensor ID a corresponding location. The mobile device is used as a relay station for transmitting the sensor ID to the base station. The sensor ID is first transmitted to the mobile device. The mobile device then forwards this sensor ID to the base station. This may be advantageous because the sensor may have a smaller transmission range than the mobile device. The sensor may transmit its sensor ID to the mobile device via a communication protocol according to the digital cellular wireless communication network or via another protocol such as for example Bluetooth or wireless LAN.

It may be advantageous to estimate the location of the mobile device by using the location information retrieved by using the sensor ID because the sensor may preferably move slower than the mobile device. Alternatively the sensor could also be fixed to a building or at a certain location such that the sensor will not move. In this case it is easy to determine the location of the mobile device by using the location information retrieved by using the sensor ID because the base station has information that the mobile device is located in the transmission range of the sensor and the location of the sensor is known.

Estimating the location of the mobile device may be advantageous for determining a transmission mode for communication between the mobile device and the base station and vice versa. It could also be advantageous to estimate the location of the mobile device for providing location-dependent information to the mobile device.

According to an embodiment of the invention a database comprises a plurality of sensor IDs and location information. The location information defines for each sensor ID a corresponding location. The location of the mobile device is estimated by comparing the sensor ID received from the mobile device with the sensor IDs of the database. In this case the location information is retrieved from the database. The database may comprise a plurality of database entries, wherein an exemplary entry of the database could for example define that sensor ID A corresponds to location X.

According to embodiments of the invention the method further comprises requesting the sensor ID from the sensor by the mobile device and receiving the sensor ID from the sensor at the mobile device. In other words the sensor transmits its sensor ID only when the sensor ID is requested by the mobile device. This may be advantageous for avoiding unnecessary signaling by the sensor for example when no mobile device in the transmission range of the sensor is present and could receive the sensor ID. In this case the sensor ID is received at the base station from the mobile device and the mobile device acts as a relay device for transmitting the sensor ID.

According to embodiments of the invention the sensor sends the sensor ID regularly to any mobile device being located in a signaling area of the sensor. The signaling area of the sensor corresponds to the transmission range of the sensor. In other words mobile devices being located in the transmission range or in the signaling area of the sensor are able to receive the sensor ID when it is sent by the sensor. Sending the sensor ID regularly could be advantageous for avoiding signaling effort from the mobile device. The mobile device would automatically receive the sensor ID when it is located in the signaling area.

According to embodiments of the invention the location of the mobile device is estimated by using a beamforming angle and/or a pathloss value and/or a time alignment value. The beamforming angle is the angle that is used by the base station for transmitting signals to the mobile device. By using the beamforming angle the base station has information in which direction the mobile device is located. The pathloss value and/or the time alignment value can be used for determining the distance between the mobile device and the base station. The pathloss value is a value that specifies the loss of signal quality during transmission of signals from the mobile device to the base station and/or vice versa. The longer the distance between the mobile device and the base station is the higher the pathloss value is. The time alignment value is a value that also could specify the distance between the mobile device and the base station because the time alignment value corresponds to the time that is used for signals being transmitted from the mobile device to the base station and vice versa. The beamforming angle and/or the pathloss value and/or the time alignment value are used for communication between the mobile device and the base station. The beamforming angle and/or the pathloss value and/or the time alignment value is determined by the base station. The base station optimizes its signal transmission parameters according to the measured beamforming angle and/or pathloss value and/or time alignment value.

The location of the mobile device estimated by using the beamforming angle and/or the pathloss value and/or the time alignment value is then compared to the location of the mobile device estimated by using the sensor ID. If the location of the mobile device has been estimated by using the sensor ID correctly the location estimated by using the sensor ID does not differ from the location estimated by using the beamforming angle and/or the pathloss value and/or the time alignment value. If the location of the mobile device estimated by using the sensor ID differs from the location estimated by using the beamforming angle and/or the pathloss value and/or the time alignment value by at least a first predetermined value, the location information in the database for the received sensor ID is updated with the location information estimated by using the beamforming angle. In practice this could for example be the case when the sensor corresponding to the received sensor ID has moved. The movement of the sensor is detected when the real location of the mobile device does not correspond to the location of the sensor. In this case the location information in the database is updated for the received sensor ID. This means that the database is updated automatically without manual intervention.

The database is also updated when a sensor ID is received that is not yet comprised by the database. For example the database comprises sensor IDs 1, 2 and 3 and sensor ID 4 is received by the base station from the mobile device. In this case the base station updates the location information in the database for the received sensor ID 4. The location information for sensor ID 4 will then be the location infor mation estimated by using the beamforming angle and/or the path loss value and/or the time alignment value.

According to embodiments of the invention the method comprises using a resource range for communication between the base station and the mobile device. The resource range may for example be a frequency range and a time range. For example the resource range may have a certain time length and a certain frequency range. A further sensor ID is received from a further mobile device and the location of the further mobile device is estimated by using the further sensor ID.

A distance and/or an angular separation is estimated between the mobile device and the further mobile device. The term angular separation refers here to the fact that the further mobile device and the mobile device may be separated in the spatial angle with respect to the base station. For example the mobile device and the further mobile device may be located at the same distance to the base station. However, the mobile device may be separated from the further mobile device because of a different spatial angle of the mobile device and the further mobile device.

If the estimated distance and/or the estimated angular separation between the mobile device and the further mobile device is at least a second predetermined value, the same resource range is used for communication between the base station and the further mobile device and vice versa. Hence, the second predetermined value is defined such that the same resource range may be used for communication with the mobile device and with the further mobile device by the base station because the signals sent from the base station to the mobile device are not received by the further mobile device and the signals sent from the base station to the further mobile device are not received by the mobile device.

The use of the same resource range for communication between the base station and the mobile device and for communication between the base station and the further mobile device can also be referred to as spatial division multiple access or as radial space division multiple access. Mobile devices being located in the transmission range of the base station can for example be classified into different classes.

The same resource range may be used for communication with mobile devices being classified in the same class. For example mobile devices can be classified in the same class when the angular separation between them is larger than the second predetermined value and/or when the radial distance between the mobile devices is larger than the second predetermined value.

The location estimated by using the sensor ID could also be used for multi-user multiple input multiple output (MIMO) transmission schemes. In each case it is advantageous that the location of the mobile device is estimated in a quick and efficient way. There is no need to estimate the beamforming angle and/or to estimate a pathloss value or a time alignment value for estimating the location. The location of the mobile device is estimated very efficiently by simply comparing the sensor ID to the database of sensor IDs. Another advantage is that the sensor may be used for many different purposes in addition to helping to estimate the location of the mobile device.

According to embodiments of the invention a modulation scheme is used for communication between the base station and the mobile device and vice versa. The modulation scheme is selected by using the location information of the mobile device. For example the modulation rate can be increased when the mobile device is located near the base station for increasing the data rate of the communication between the base station and the mobile device and vice versa. Also the vertical angle used by the base station for transmitting and receiving signals to and from the mobile device can be adjusted according to the estimated location of the mobile device. When the mobile device is located relatively far away from the base station the modulation scheme may be selected such that the communication link between the base station and the mobile device has a high signal to interference and noise ratio such that radio link failures are avoided. For this purpose for example the redundancy of transmitted signals between the base station and the mobile device and vice versa may be increased.

According to embodiments of the invention a transmission mode with respect to an antenna system with multiple transmit and receive antennas is used for communica tion between the base station and the mobile device. The transmission mode is determined by using the estimated location of the mobile device.

According to embodiments of the invention at least one further sensor ID is requested from the mobile device from at least one further sensor. The at least one further sensor ID is received at the mobile device from the at least one further sensor. The location is estimated by using the sensor ID and the at least one further sensor ID. In other words more than one sensor is used for estimating the location of the mobile device. This could for example be the case when sensors are arranged in a sensor cluster. This may for example be the case in industrial production facilities where a plurality of sensors is used for automation purposes. By transmitting more than one sensor ID from the mobile device to the base station the location estimated by using the sensor IDs can be estimated more precisely than would be the case with only one sensor ID.

In other words the location is estimated by using the sensor ID and the at least one further sensor ID. The further sensor ID is received from the mobile device. The further sensor ID is indicative of the further sensor. The further sensor ID originates from the further sensor.

According to embodiments of the invention the sensor has a first transmission range. The mobile device has a second transmission range. The second transmission range is larger than the first transmission range. In other words the mobile device is used as a relay station for transmitting the sensor ID to the base station.

According to embodiments of the invention a movement speed and/or a movement direction of the mobile device is estimated by using a plurality of estimated locations. In practice a first location may be estimated at a first time point and a second location may be determined at a second time point. The base station has information about the distance between the two locations. The base station can calculate the speed of the mobile device and/or the movement direction of the mobile device by using the distance between the two locations and the time it has taken the mobile device for moving from one location to the other location. This could also be per formed with more than just two locations. This is just an example for simplicity reasons. The more locations that are used for estimating the movement speed and/or the movement direction the more precise the calculation becomes.

According to embodiments of the invention the movement speed and/or the movement direction is used for determining the transmission mode. The movement speed and/or the movement direction may also be used for determining the modulation scheme. For example a higher data transmission rate is used for mobile devices moving with a slow movement speed and a low data transmission rate is used for mobile devices being moved with a high movement speed for avoiding radio link failures.

In another aspect the invention relates to a base station comprising means for receiving a sensor ID from a mobile device. The sensor ID corresponds to a sensor and has been sent from the sensor to the mobile device via an air interface. The base station further comprises means for retrieving location information for the sensor ID from a storage. The base station furthermore comprises means for estimating the location of the mobile device by using the location information. The base station may for example comprise a processor, a data storage and program instructions stored in the data storage. The processor is configured to execute the program instructions and to retrieve location information for the sensor ID from the storage and to estimate the location of the mobile device. The location information may be stored in the storage where also the program instructions are stored. Alternatively the location information may also be stored in another storage. The other storage could also be located outside the base station. The base station can have direct or indirect access to the storage. The sensor ID may for example be received from the mobile device via an antenna of the base station.

In yet another aspect the invention relates to a computer program product comprising instructions executable by a processor that cause a base station to perform a method according to embodiments of the invention.

### Brief description of the drawings

In the following embodiments of the invention are explained in greater detail, by way of example only, making reference to the drawings in which:
- Fig. 1: is a schematic view of two mobile devices, a base station and two sensor clusters according to embodiments of the invention,
- Fig. 2: is a schematic view of a mobile device moving from a first sensor cluster to a second sensor cluster,
- Fig. 3: is a flow diagram of a method according to an embodiment of the invention, and
- Fig. 4: is a block diagram of a base station according to an embodiment of the invention.

### Detailed description

Like numbered elements in these Figs. are either identical elements or perform the same function. Elements which have been discussed previously will not necessarily be discussed in later Figs. if the function is identical.

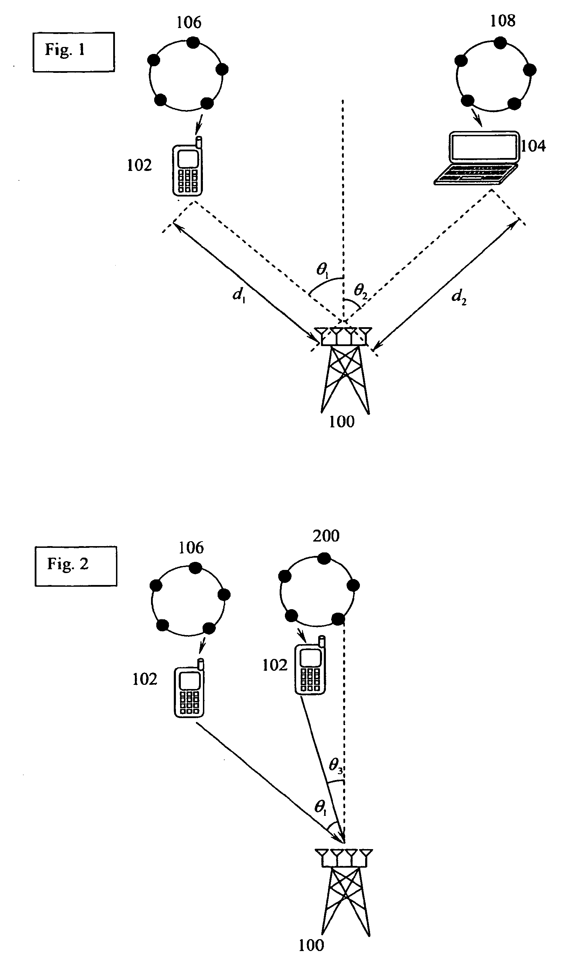

Fig. 1 is a schematic view of a base station 100, a first mobile device 102, a second mobile device 104, a first sensor cluster 106 and a second sensor cluster 108.

The distance between the first mobile device 102 and the base station is denoted by d₁ and the spatial angle θ₁. The distance between the second mobile device 104 and the base station 100 is denoted by d₂ and θ₂. The first sensor cluster 106 and the second sensor cluster 108 each comprise a plurality of sensors. The sensors may for example be used for sensing measurement values in an automation process. The sensors of the first sensor cluster and the second sensor cluster each transmit sensor IDs either on request or regularly. The first mobile device 102 receives the sensor IDs of the first sensor cluster 106 and the second mobile device 104 receives the sensor IDs of the second sensor cluster 108.

The sensors of the first sensor cluster 106 may for example all have the same sensor ID or all have different sensor IDs. This may for example depend on the distance between the sensors of the first sensor cluster 106. It may be advantageous to have different sensor IDs for the sensors of sensor cluster 106 when the distance between the sensors is relatively large such that the first mobile device 102 cannot receive a first sensor ID from the first sensor cluster 106 when it receives a second sensor ID from the first sensor cluster 106. If the sensors of sensor cluster 106 are located relatively close each to one another each sensor of the sensor cluster 106 may have the same sensor ID. The same applies for the second sensor cluster 108.

The sensor IDs of the first sensor cluster 106 and of the second sensor cluster 108 may for example be transmitted by the first mobile device 102 and the second mobile device 104 respectively when also the measurement values measured by the sensors are transmitted from the sensors to the base station 100. For example the first sensor cluster 106 uses the first mobile device 102 as a relay station for transmitting the measurement values sensed by the sensors of sensor cluster 106 to the base station 100. Then the sensor ID could also be transmitted at the same time. This avoids unnecessary signaling. The location estimation can be performed by the base station by using the sensor ID. The sensor ID may for example be compared to sensor IDs stored in a database. The database may for example comprise location information for each sensor ID. The same applies for the second sensor cluster 108 and the second mobile device 104 respectively.

The base station 100 can then use the location information for optimizing the modulation scheme used for communication between the mobile devices 102 and 104 with the base station 100. It is to be noted that different modulation schemes may be used for communication with the first mobile device 102 and for the second mobile device 104.

If the distance between the first mobile device 102 and the second mobile device 104 is large enough the base station can use the same frequency range at the same time for communication with the mobile device 102 and with the mobile device 104. Signals sent to the mobile device 102 will not be received by the mobile device 104 and vice versa.

Estimating the location of the mobile device 102 and the mobile device 104 by using the sensor IDs of sensor clusters 106 and 108 may be advantageous for estimating the location of the mobile devices 102 and 104 in a very quick and efficient way. There is no need to calculate the distance from beamforming angles and/or pathloss values. The location of the mobile devices 102 and 104 is estimated by the base station 100 efficiently by using the sensor ID and comparing the sensor ID to entries in the database.

Fig. 2 is a schematic view of the first mobile device being moved from a first location to a second location. The first location of the mobile device is in the vicinity of the first sensor cluster 106. The second location of the mobile device 102 is in the vicinity of a third sensor cluster 200. The location of the mobile device 102 is estimated by the base station 100 at a first time point as being near the sensor cluster 106. At a second time point the base station 100 estimates the location of the mobile device 102 in the vicinity of the sensor cluster 200 by using the sensor ID of the sensor cluster 200. Hence, the base station 100 has now information of a first location of the mobile device 102 at a first time point and of a second location of the mobile device 102 at the second time point. Both locations are specified by a distance dᵢ and a spatial angle θᵢ. The base station 100 calculates the movement speed from the difference between the first time point and the second time point and the distance between the first location of the mobile device 102 and the second location of the mobile device 102. The base station 100 can then adjust the modulation scheme and/or the transmission mode by using the information about the movement speed and the movement direction of the first mobile device 102.

The location information in the database of the base station 100 can already be stored in the base station 100 before a mobile device sends a sensor ID to the base station 100. Alternatively the database can be set up in the base station dynamically. This may be performed for example that a sensor ID is received from a mobile device and the location of the mobile device is estimated with techniques known in the state of the art. The location information is then stored in the database and linked with the received sensor ID. This can be performed for a plurality of sensor IDs. Preferably the database is updated dynamically such that a location information for a sensor ID is updated when it is obvious that the location information is wrong. For this purpose the base station 100 may determine regularly or triggered manually by an operator the location of a mobile device with state of the art techniques and compare this estimated location with the location estimated by using the sensor ID. If the first estimated location differs from the second estimated location by at least a first predetermined value then the location information in the database is updated with the location information measured by state of the art techniques. Thereby the database of the base station 100 is kept up to date and movement of a sensor or a sensor cluster is registered by the base station 100 and it is taken account of the change of the location of the sensor and/or the sensor cluster.

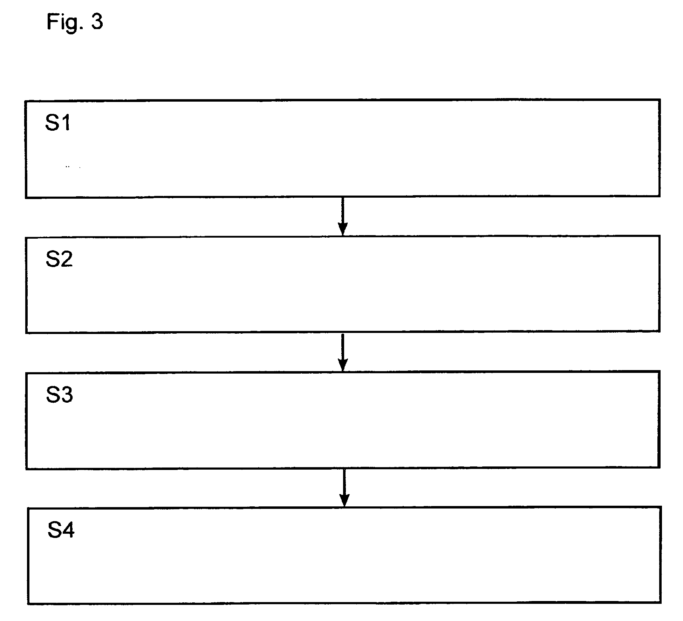

Fig. 3 is a flow diagram of a method according to an embodiment of the invention. In a first step S1 a sensor ID is sent from a sensor to a mobile device. The mobile device then sends the sensor ID in a second step S2 to a base station. The base station retrieves location information for this sensor ID in step S3 from a data storage. In step S4 the location of the mobile device is estimated by using the location information.

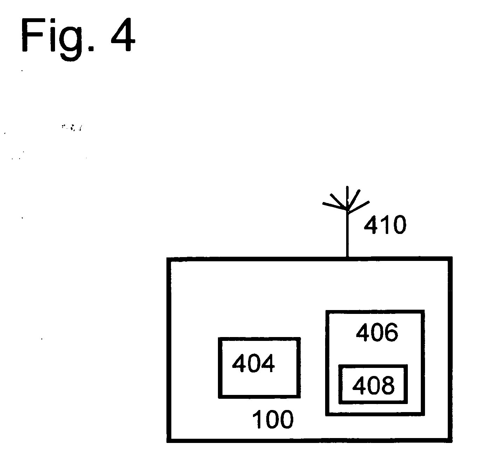

Fig. 4 is a block diagram of a base station 100. Base station 100 comprises a processor 404, a storage 406 comprising program instructions 408, and an antenna 410. In operation sensor IDs may be received via antenna 410 and the processor 404 is configured to execute program instructions 408. When a sensor ID is received by base station 100 the processor 404 retrieves location information and estimates the location of the mobile device that has transmitted the sensor ID to the base station 100.

Location information may be retrieved by processor 404 from a database being stored in data storage 406. Alternatively the location information may be stored in another data storage of the base station 100 or in a storage being not comprised by base station 100. The base station 100 can for example have access to the database directly or indirectly via network connections.

### List of reference numerals

| | |
|---|---|
| 100 | Base station |
| 102 | First mobile device |
| 104 | Second mobile device |
| 106 | First sensor cluster |
| 108 | Second sensor cluster |
| 200 | Third sensor cluster |
| 404 | Processor |
| 406 | Storage |
| 408 | Program instructions |
| 410 | Antenna |

## Claims

1. A method for estimating a location of a mobile device (102; 104), wherein the method comprises the following steps:
receiving (S2), at a base station (100), a sensor ID of a sensor (106; 108; 200) from the mobile device (102; 104);
retrieving (S3), from a database in a storage (406), location information for the sensor (106; 108; 200) based on the received sensor ID;
estimating (S4), at the base station (100) a first location of the mobile device (102; 104) based on the retrieved location information for the sensor (106; 108; 200)
estimating a second location of the mobile device (102; 104) and
updating the location information for the sensor in the database with the second estimated mobile device location, if the second estimated mobile device location differs from the first estimated location of the mobile device (102; 104) by at least a first predetermined value.

2. Method according to claim 1, wherein the estimating step (S3) further comprises:
comparing the received sensor ID to the database comprising a plurality of sensor IDs and corresponding location information.

3. Method according to any one of the preceding claims, wherein the method further comprises the following step:
receiving the sensor ID through a relay device.

4. Method according to claim 3, wherein the relay device is a mobile device.

5. Method according to any one of the preceding claims, wherein the method further comprises the following steps:
using a resource range for communication between the base station (100) and the mobile device (102; 104), wherein the resource range has a certain time length and a certain frequency range;
receiving, at the base station, a further sensor ID from a further mobile device (102; 104);
estimating the location of the further mobile device (102; 104) by using the further sensor ID;
estimating, at the base station (100), a distance and/or an angular separation between the mobile device (102; 104) and the further mobile device (102; 104),wherein the angular separation indicates the separation of the further mobile device and the mobile device in a spatial angle with respect to the base station;
using the same resource range for communication between the base station (100) and the further mobile device (102; 104), if the estimated distance and/or the angular separation between the mobile device (102; 104) and the further mobile device (102; 104) is at least a second predetermined value.

6. Method according to any one of the preceding claims, wherein a modulation scheme is used for communication between the base station (100) and the mobile device (102; 104), wherein the modulation scheme is selected by using the location information of the mobile device (102; 104).

7. Method according to any one of the preceding claims, wherein a transmission mode and an antenna system with multiple transmit and receive antennas is used for communication between the base station (100) and the mobile device (102; 104), wherein the transmission mode is determined by using the first estimated location of the mobile device (102; 104).

8. Method according to any one of the claims 4-7, wherein the location of the mobile device is estimated by using the sensor ID and at least one further sensor ID, wherein the further sensor ID is received from the mobile device (102; 104), wherein the further sensor ID is indicative of a further sensor (106; 108; 200), and wherein the further sensor ID originates from the further sensor (106; 108; 200).

9. Method according to any one of the preceding claims, wherein the sensor (106; 108; 200) has a first transmission range, wherein the mobile device (102; 104) has a second transmission range, and wherein the second transmission range is larger than the first transmission range.

10. Method according to any one of the preceding claims, wherein a movement speed and/or a movement direction of the mobile device (102; 104) is estimated by using a plurality of estimated locations.

11. Method according to claim 10, wherein the movement speed and/or the movement direction is used for determining the transmission mode.

12. Method according to claim 1, wherein estimating a second location of the mobile device is performed by using a beamforming angle and/or a pathloss value and/or a time alignment value, wherein the beamforming angle and/or the pathloss and/or the time alignment value has been used for communication between the mobile device (102; 104) and the base station (100)

13. A base station (100) comprising:
means (410) for receiving a sensor ID of a sensor (106; 108; 200) from a mobile device;
means (404; 408) for retrieving, from a storage (406), location information for the sensor (106; 108; 200) based on the received sensor ID;
means (404; 408) for estimating a first location of the mobile device (102; 104) based on the retrieved location information for the sensor (106; 108; 200);
means for estimating a second location of the mobile device (102; 104) and
means for updating the location information for the sensor in the database with the second estimated mobile device location, if the second estimated mobile device location differs from the first estimated location of the mobile device (102; 104) by at least a first predetermined value.

14. A computer program product (406) comprising instructions (408) executable by a processor (404) that cause a base station (100) to perform a method according to any one of the claims 1-12.

## Patentansprüche

1. Verfahren zum Schätzen der Position einer mobilen Vorrichtung (102; 104), wobei das Verfahren die folgenden Schritte umfasst:
Empfangen (S2), an einer Basisstation (100), einer Sensor-ID eines Sensors (106; 108; 200) von der mobilen Vorrichtung (102; 104).
Abrufen (S3), aus einer Datenbank in einem Speicher (406), von Positionsinformationen für den Sensor (106; 108; 200) auf der Basis der empfangenen Sensor-ID;
Schätzen (S4), an der Basisstation (100), einer ersten Position der mobilen Vorrichtung (102; 104) auf der Basis der abgerufenen Positionsinformationen für den Sensor (106; 108; 200);
Schätzen einer zweiten Position der mobilen Vorrichtung (102; 104) und
Aktualisieren der Positionsinformationen für den Sensor in der Datenbank mit der zweiten geschätzten Position der mobilen Vorrichtung, wenn die zweite geschätzte Position der mobilen Vorrichtung um mindestens einen ersten vorbestimmten Wert von der ersten geschätzten Position der mobilen Vorrichtung (102; 104) abweicht.

2. Verfahren nach Anspruch 1, wobei der Schritt des Schätzens (S3) weiterhin umfasst:
Vergleichen der empfangenen Sensor-ID mit der Datenbank, welche eine Vielzahl von Sensor-IDs und entsprechenden Positionsinformationen enthält.

3. Verfahren nach einem beliebigen der vorstehenden Ansprüche, wobei das Verfahren weiterhin den folgenden Schritt umfasst:
Empfangen der Sensor-ID über eine Relais-Vorrichtung.

4. Verfahren nach Anspruch 3, wobei die Relais-Vorrichtung eine mobile Vorrichtung ist.

5. Verfahren nach einem beliebigen der vorstehenden Ansprüche, wobei das Verfahren weiterhin die folgenden Schritte umfasst:
Verwenden eines Ressourcenbereichs für die Kommunikation zwischen der Basisstation (100) und der mobilen Vorrichtung (102; 104), wobei der Ressourcenbereich eine bestimmte zeitliche Länge und einen bestimmten Frequenzbereich hat;
Empfangen, an der Basisstation, einer weiteren Sensor-ID von einer weiteren mobilen Vorrichtung (102; 104);
Schätzen der Position der weiteren mobilen Vorrichtung (102; 104) unter Verwendung der weiteren Sensor-ID;
Schätzen, an der Basisstation (100), einer Entfernung und/oder eines Winkelabstands zwischen der mobilen Vorrichtung (102; 104) und der weiteren mobilen Vorrichtung (102; 104), wobei der Winkelabstand den Abstand zwischen der weiteren mobilen Vorrichtung und der mobilen Vorrichtung in einem Raumwinkel im Verhältnis zu der Basisstation anzeigt;
Verwenden desselben Ressourcenbereichs für die Kommunikation zwischen der Basisstation (100) und der weiteren mobilen Vorrichtung (102; 104), wenn die geschätzte Entfernung und/oder der Winkelabstand zwischen der mobilen Vorrichtung (102; 104) und der weiteren mobilen Vorrichtung (102; 104) mindestens einem zweiten vorbestimmten Wert entspricht.

6. Verfahren nach einem beliebigen der vorstehenden Ansprüche, wobei ein Modulationsschema für die Kommunikation zwischen der Basisstation (100) und der mobilen Vorrichtung (102; 104) verwendet wird, wobei das Modulationsschema unter Verwendung der Positionsinformationen der mobilen Vorrichtung (102; 104) ausgewählt wird.

7. Verfahren nach einem beliebigen der vorstehenden Ansprüche, ein Übertragungsmodus und ein Antennensystem mit mehreren Sende- und Empfangsantennen für die Kommunikation zwischen Basisstation (100) und der mobilen Vorrichtung (102; 104) verwendet wird, wobei der Übertragungsmodus unter Verwendung der ersten geschätzten Position der mobilen Vorrichtung (102; 104) bestimmt wird.

8. Verfahren nach einem beliebigen der Ansprüche 4-7, wobei die Position der mobilen Vorrichtung unter Verwendung der Sensor-ID und mindestens einer weiteren Sensor-ID geschätzt wird, wobei die weitere Sensor-ID von der mobilen Vorrichtung (102; 104) empfangen wird, wobei die weitere Sensor-ID für einen weiteren Sensor (106; 108; 200) indikativ ist, und wobei die weitere Sensor-ID von dem ersten Sensor (106; 108; 200) stammt.

9. Verfahren nach einem beliebigen der vorstehenden Ansprüche, wobei der Sensor (106; 108; 200) eine erste Übertragungsreichweite hat, wobei die mobile Vorrichtung (102; 104) eine zweite Übertragungsreichweite hat, und wobei die zweite Übertragungsreichweite höher als die erste Übertragungsreichweite ist.

10. Verfahren nach einem beliebigen der vorstehenden Ansprüche, wobei eine Bewegungsgeschwindigkeit und/oder eine Bewegungsrichtung der mobilen Vorrichtung (102; 104) unter Verwendung einer Vielzahl von geschätzten Positionen geschätzt wird.

11. Verfahren nach Anspruch 10, wobei die Bewegungsgeschwindigkeit und/oder die Bewegungsrichtung für das Bestimmen des Übertragungsmodus verwendet wird.

12. Verfahren nach Anspruch 1, wobei das Schätzen einer zweiten Position der mobilen Vorrichtung unter Verwendung eines Beamforming-Winkels und/oder eines Pfadverlustwertes und/oder eines Zeitanpassungswertes durchgeführt wird, wobei der Beamforming-Winkel und/oder der Pfadverlustwert und/oder der Zeitanpassungswert für die Kommunikation zwischen der mobilen Vorrichtung (102; 104) und der Basisstation (100) verwendet wurden.

13. Basisstation (100) umfassend:
Mittel (410) zum Empfangen einer Sensor-ID eines Sensors (106; 108; 200) von einer mobilen Vorrichtung;
Mittel (404; 408) zum Abrufen, aus einem Speicher (406), von Positionsinformationen für den Sensor (106; 108; 200) auf der Basis der empfangenen Sensor-ID;
Mittel (404; 408) zum Schätzen einer ersten Position der mobilen Vorrichtung (102; 104) auf der Basis der abgerufenen Positionsinformationen für den Sensor (106; 108; 200);
Mittel zum Schätzen einer zweiten Position der mobilen Vorrichtung (102; 104) und Mittel zum Aktualisieren der Positionsinformationen für den Sensor in der Datenbank mit der zweiten geschätzten Position der mobilen Vorrichtung, wenn die zweite geschätzte Position der mobilen Vorrichtung Position um mindestens einen ersten vorbestimmten Wert von der ersten geschätzten Position der mobilen Vorrichtung (102; 104) abweicht.

14. Computerprogramm-Produkt (406) mit von einem Prozessor (404) ausführbaren Befehlen (408), welche bewirken, dass eine Basisstation (100) ein Verfahren gemäß einem beliebigen der Ansprüche 1-12 durchführt.

## Revendications

1. Procédé pour estimer un emplacement d'un dispositif mobile (102 ; 104), le procédé comprenant les étapes suivantes :
recevoir (S2), au niveau d'une station de base (100), une identification de capteur d'un capteur (106 ; 108 ; 200) à partir du dispositif mobile (102 ; 104),
récupérer (S3), à partir d'une base de données dans un stockage (406), des informations d'emplacement pour le capteur (106 ; 108 ; 200) sur la base de l'identification de capteur reçue ;
estimer (S4), au niveau de la station de base (100), un premier emplacement du dispositif mobile (102 ; 104) sur la base des informations d'emplacement récupérées pour le capteur (106 ; 108 ; 200) ;
estimer un deuxième emplacement du dispositif mobile (102 ; 104) et
mettre à jour les informations d'emplacement pour le capteur dans la base de données avec le deuxième emplacement estimé du dispositif mobile, si le deuxième emplacement estimé du dispositif mobile est différent du premier emplacement estimé du dispositif mobile (102 ; 104) d'au moins une première valeur prédéterminée.

2. Procédé selon la revendication 1, dans lequel l'étape d'estimation (S3) comprend en outre l'étape suivante : comparer l'identification de capteur reçue à la base de données comprenant une pluralité d'identifications de capteur et d'informations d'emplacement correspondantes.

3. Procédé selon l'une quelconque des revendications précédentes, le procédé comprenant en outre l'étape suivante :
recevoir l'identification de capteur par l'intermédiaire d'un dispositif relais.

4. Procédé selon la revendication 3, dans lequel le dispositif relais est un dispositif mobile.

5. Procédé selon l'une quelconque des revendications précédentes, le procédé comprenant en outre les étapes suivantes :
utiliser une plage de ressources pour la communication entre la station de base (100) et le dispositif mobile (102 ; 104), la plage de ressources présentant une certaine durée et une certaine plage de fréquences ;
recevoir, au niveau de la station de base, une autre identification de capteur à partir d'un autre dispositif mobile (102 ; 104) ;
estimer l'emplacement de l'autre dispositif mobile (102 ; 104) en utilisant l'autre identification de capteur ;
estimer, au niveau de la station de base (100), une distance et/ou une séparation angulaire entre le dispositif mobile (102 ; 104) et l'autre dispositif mobile (102 ; 104),
l'écart angulaire indiquant l'écart de l'autre dispositif mobile et du dispositif mobile dans un angle spatial par rapport à la station de base ;
utiliser la même plage de ressources pour la communication entre la station de base (100) et l'autre dispositif mobile (102 ; 104), si la distance estimée et/ou l'écart angulaire entre le dispositif mobile (102 ; 104) et l'autre dispositif mobile (102 ; 104) est au moins une deuxième valeur prédéterminée.

6. Procédé selon l'une quelconque des revendications précédentes, dans lequel un schéma de modulation est utilisé pour la communication entre la station de base (100) et le dispositif mobile (102 ; 104), le schéma de modulation étant sélectionné en utilisant les informations d'emplacement du dispositif mobile (102 ; 104).

7. Procédé selon l'une quelconque des revendications précédentes, dans lequel un mode de transmission et un système d'antennes présentant de multiples antennes d'émission et de réception est utilisé pour la communication entre la station de base (100) et le dispositif mobile (102 ; 104), le mode de transmission étant déterminé en utilisant le premier emplacement estimé du dispositif mobile (102 ; 104).

8. Procédé selon l'une quelconque des revendications 4 à 7, dans lequel l'emplacement du dispositif mobile est estimé en utilisant l'identification de capteur et au moins une autre identification de capteur, l'autre identification de capteur étant reçue à partir du dispositif mobile (102 ; 104), l'autre identification de capteur indiquant un autre capteur (106 ; 108 ; 200), et l'autre identification de capteur étant issue de l'autre capteur (106 ; 108 ; 200).

9. Procédé selon l'une quelconque des revendications précédentes, dans lequel le capteur (106 ; 108 ; 200) présente une première plage de transmissions, dans lequel le dispositif mobile (102 ; 104) présente une deuxième plage de transmissions, et dans lequel la deuxième plage de transmissions est plus importante que la première plage de transmissions.

10. Procédé selon l'une quelconque des revendications précédentes, dans lequel une vitesse de déplacement et/ou un sens de déplacement du dispositif mobile (102 ; 104) est/sont estimé(s) en utilisant une pluralité d'emplacements estimés.

11. Procédé selon la revendication 10, dans lequel la vitesse de déplacement et/ou le sens de déplacement est/sont utilisé(s) pour déterminer le mode de transmission.

12. Procédé selon la revendication 1, dans lequel l'estimation d'un deuxième emplacement du dispositif mobile est effectuée en utilisant un angle de formation de faisceau et/ou une valeur d'affaiblissement de propagation et/ou une valeur d'alignement dans le temps, dans lequel l'angle de formation de faisceau et/ou la valeur d'affaiblissement de propagation et/ou la valeur d'alignement dans le temps a/ont été utilisé(s) pour la communication entre le dispositif mobile (102 ; 104) et la station de base (100).

13. Station de base (100) comprenant :
des moyens (410) pour recevoir une identification de capteur d'un capteur (106 ; 108 ; 200) à partir d'un dispositif mobile ;
des moyens (404 ; 408) pour récupérer, à partir d'un stockage (406), des informations d'emplacement pour le capteur (106 ; 108 ; 200) sur la base de l'identification de capteur reçue ;
des moyens (404 ; 408) pour estimer un premier emplacement du dispositif mobile (102 ; 104) sur la base des informations d'emplacement récupérées pour le capteur (106 ; 108 ; 200) ;
des moyens pour estimer un deuxième emplacement du dispositif mobile (102 ; 104) ; et
des moyens pour mettre à jour les informations d'emplacement pour le capteur dans la base de données avec le deuxième emplacement estimé du dispositif mobile, si le deuxième emplacement estimé du dispositif mobile est différent du premier emplacement estimé du dispositif mobile (102 ; 104) d'au moins une première valeur prédéterminée.

14. Produit de programme informatique (406) comprenant des instructions (408) exécutables par un processeur (404) qui entraînent l'exécution par une station de base (100) d'un procédé selon l'une quelconque des revendications 1 à 12.
